(19) Europäisches Patentamt / European Patent Office / Office européen des brevets

(11) **EP 4 304 874 B1**

(12) **FASCICULE DE BREVET EUROPEEN**

(45) Date de publication et mention de la délivrance du brevet:
**12.02.2025 Bulletin 2025/07**

(21) Numéro de dépôt: **22710666.3**

(22) Date de dépôt: **21.02.2022**

(51) Classification Internationale des Brevets (IPC):
***B60C 1/00*** *(2006.01)* ***C08F 210/02*** *(2006.01)*
***C08L 47/00*** *(2006.01)*

(52) Classification Coopérative des Brevets (CPC):
(C-Sets disponibles)
**C08L 47/00; B60C 1/0016; C08F 210/02** (Cont.)

(86) Numéro de dépôt international:
**PCT/FR2022/050304**

(87) Numéro de publication internationale:
**WO 2022/189718 (15.09.2022 Gazette 2022/37)**

(54) **COMPOSITION DE CAOUTCHOUC**

KAUTSCHUKZUSAMMENSETZUNG

RUBBER COMPOSITION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.03.2021 FR 2102399**

(43) Date de publication de la demande:
**17.01.2024 Bulletin 2024/03**

(73) Titulaire: **COMPAGNIE GENERALE DES ETABLISSEMENTS MICHELIN**
**63000 Clermont-Ferrand (FR)**

(72) Inventeurs:
- **MAMMERI, Kahina**
**63040 CLERMONT-FERRAND Cedex 9 (FR)**
- **MORESO, Emma**
**63040 CLERMONT-FERRAND Cedex 9 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
**US-A1- 2021 009 729 US-A1- 2021 054 118**

Il est rappelé que: Dans un délai de neuf mois à compter de la publication de la mention de la délivrance du brevet européen au Bulletin européen des brevets, toute personne peut faire opposition à ce brevet auprès de l’Office européen des brevets, conformément au règlement d’exécution. L’opposition n’est réputée formée qu’après le paiement de la taxe d’opposition. (Art. 99(1) Convention sur le brevet européen).

EP 4 304 874 B1

(52) Classification Coopérative des Brevets (CPC):
(Cont.)

C-Sets
**C08F 210/02, C08F 4/72;**
**C08L 47/00, C08L 57/02, C08L 91/00, C08K 3/04, C08K 3/36, C08K 5/548, C08K 5/09, C08K 5/31, C08K 3/22, C08K 5/47, C08K 3/06;**
C08F 210/02, C08F 236/045, C08F 236/06;
C08F 210/02, C08F 236/06, C08F 236/045

## Description

La présente invention concerne des compositions de caoutchouc diénique destinées à être utilisées dans un pneumatique qui contiennent majoritairement à titre d'élastomère un copolymère d'éthylène et de 1,3-diènes.

Les compositions de caoutchouc diénique traditionnellement utilisées dans le pneumatique sont des compositions de caoutchouc renforcées par des élastomères diéniques fortement insaturés comme les polybutadiènes, les polyisoprènes, les copolymères de butadiène et de styrène.

Il a été proposé, notamment dans le document WO 2014114607, d'utiliser des copolymères d'éthylène et de 1,3-butadiène dans des compositions de caoutchouc pour pneumatique. Ces copolymères qui contiennent plus de 50% en mole d'unités éthylène sont qualifiés d'élastomères diéniques fortement saturés.

Les compositions de caoutchouc comprenant ces élastomères diéniques fortement saturés requièrent des temps de séjour dans une presse de cuisson relativement longs pour être vulcanisées, ce qui a pour conséquence de diminuer la productivité d'une chaîne de fabrication d'articles contenant ces compositions de caoutchouc, tels que des pneumatiques. Par ailleurs, ces compositions de caoutchouc une fois vulcanisées présentent une rigidité bien plus élevée que les compositions de caoutchouc diénique traditionnellement utilisées et peuvent donc s'avérer inappropriées pour certaines applications. Le niveau de rigidité d'une composition de caoutchouc est défini en partie par le degré de vulcanisation du caoutchouc qui dépend à la fois de la cinétique de vulcanisation et du temps de séjour de la composition de caoutchouc dans la presse de cuisson. La solution qui consisterait tout simplement à extraire la composition de caoutchouc de la presse de cuisson avant le terme de la réaction de vulcanisation n'est pas satisfaisante, car elle conduirait à une composition de caoutchouc insuffisamment cuite qui serait alors davantage hystérétique.

La Demanderesse a découvert une composition de caoutchouc renforcée à base d'un copolymère d'éthylène et de 1,3-diènes qui permet de résoudre les difficultés rencontrées et qui a donc l'avantage de présenter un compromis amélioré entre les propriétés de rigidité, d'hystérèse et de cuisson.

Ainsi, un premier objet de l'invention est une composition de caoutchouc qui comprend une charge renforçante, un système de vulcanisation et plus de 50 à 100 pce d'un élastomère qui contient plus de 50% en mole d'unités éthylène et qui est un copolymère d'éthylène, d'un premier 1,3-diène qui est le 1,3-butadiène, l'isoprène ou leur mélange, et d'un deuxième 1,3-diène de formule $CH_2=CR-CH=CH_2$, le symbole R représentant une chaîne aliphatique hydrocarbonée insaturée ayant 3 à 20 atomes de carbone.

Un autre objet de l'invention est un pneumatique qui comporte une bande de roulement, lequel pneumatique comprend une composition de caoutchouc conforme à l'invention, en particulier dans sa bande de roulement.

## Description

Tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

L'abréviation "pce" signifie parties en poids pour cent parties d'élastomère (du total des élastomères si plusieurs élastomères sont présents).

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. De la même manière, les composés mentionnés peuvent également provenir du recyclage de matériaux déjà utilisés, c'est-à-dire qu'ils peuvent être, partiellement ou totalement, issus d'un procédé de recyclage, ou encore obtenus à partir de matières premières elles-mêmes issues d'un procédé de recyclage.

Dans la présente invention, on entend par pneumatique (en anglais « tyre ») un bandage pneumatique ou non pneumatique. Un bandage pneumatique comporte usuellement deux bourrelets destinés à entrer en contact avec une jante, un sommet composé d'au moins une armature de sommet et une bande de roulement, deux flancs, le pneumatique étant renforcé par une armature de carcasse ancrée dans les deux bourrelets. Un bandage non-pneumatique, quant à lui, comporte usuellement une base, conçue par exemple pour le montage sur une jante rigide, une armature de sommet, assurant la liaison avec une bande de roulement et une structure déformable, tels que des rayons, nervures ou alvéoles, cette structure étant disposée entre la base et le sommet. De tels bandages non-pneumatiques ne comprennent pas nécessairement de flanc. Des bandages non-pneumatiques sont décrits par exemples dans les documents WO 03/018332 et FR2898077. Selon l'un quelconque des modes de réalisation de l'invention, le pneumatique selon l'invention est préférentiellement un bandage pneumatique.

Sauf indication contraire, les taux des unités résultant de l'insertion d'un monomère dans un copolymère tel que le copolymère utile à l'invention sont exprimés en pourcentage molaire par rapport à la totalité des unités monomères du copolymère.

L'élastomère utile aux besoins de l'invention est un copolymère d'éthylène, d'un premier 1,3-diène et d'un deuxième 1,3-diène.

Le premier 1,3-diène est le 1,3-butadiène, l'isoprène ou leur mélange, c'est-à-dire un mélange de 1,3-butadiène et d'isoprène. Le premier 1,3-diène est préférentiellement le 1,3-butadiène.

Le deuxième 1,3-diène répond à la formule (I) dans laquelle le symbole R représente une chaîne aliphatique hydrocarbonée insaturée ayant 3 à 20 atomes de carbone.

$$CH_2{=}CR\text{-}CH{=}CH_2 \qquad \text{(I)}$$

Le deuxième 1,3-diène est un seul composé, c'est-à-dire un seul (en anglais « one ») 1,3-diène de formule (I) ou est un mélange de 1,3-diènes de formule (I), les 1,3-diènes du mélange se différenciant les uns des autres par le groupe représenté par le symbole R.

De préférence, la chaîne représentée par R contient 6 à 16 atomes de carbone. Elle peut être une chaîne linéaire ou ramifiée, auquel cas le symbole R représente une chaîne linéaire ou ramifiée. De préférence, la chaîne hydrocarbonée est acyclique, auquel cas le symbole R représente une chaîne acyclique. Mieux, le symbole R représente une chaîne hydrocarbonée acyclique insaturée et ramifiée. La chaîne hydrocarbonée représentée par le symbole R est avantageusement une chaîne acyclique insaturée et ramifiée contenant de 3 à 20 atomes de carbone, en particulier de 6 à 16 atomes de carbone. Très avantageusement, le 1,3-diène est le myrcène, le β-farnésène ou un mélange de myrcène et de β-farnésène.

Selon un mode de réalisation préférentiel de l'invention, le 1,3-diène est le myrcène.

Selon un autre mode de réalisation préférentiel de l'invention, le 1,3-diène est le β-farnésène.

Comme le copolymère est un copolymère d'éthylène, d'un premier 1,3-diène et d'un deuxième 1,3-diène, les unités monomères du copolymère sont des unités résultant de la polymérisation de l'éthylène, du premier 1,3-diène et du deuxième 1,3-diène. Le copolymère comprend donc des unités éthylène, des unités du premier 1,3-diène et des unités du deuxième 1,3-diène.

Le deuxième 1,3-diène étant un 1,3 diène substitué, sa polymérisation peut donner lieu à des unités de configuration 1,2 représentée par la formule (1), de configuration 3,4 représentée par la formule (2) et de configuration 1,4 dont la forme trans est représentée ci-après par la formule (3).

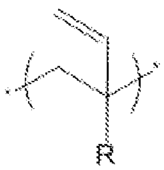

(1)

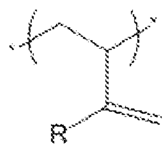

(2)

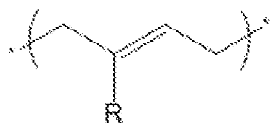

(3)

De manière bien connue, le premier 1,3-diène peut donner lieu à des unités 1,3-diène qui sont des unités de configuration 1,2 ou 3,4 comme c'est le cas par exemple de l'isoprène et des unités de configuration 1,4.

De manière également bien connue, l'unité éthylène est une unité de motif $-(CH_2\text{-}CH_2)-$.

Le copolymère utile à l'invention est avantageusement un copolymère statistique selon l'un quelconque des modes de réalisation de l'invention. Très avantageusement, le copolymère est un polymère atactique selon l'un quelconque des modes de réalisation de l'invention.

Selon l'invention, le copolymère contient plus de 50% en mole d'unités éthylène. De préférence, le copolymère contient plus de 60% en mole d'unités éthylène. De manière plus préférentielle, il contient au moins 70% en mole d'unités éthylène. Le copolymère contient préférentiellement au plus 85% en mole d'unités éthylène.

De préférence, le copolymère contient moins de 30% en mole d'unités du deuxième 1,3-diène. De manière plus préférentielle, le copolymère contient au plus 20% en mole d'unités du deuxième 1,3-diène. De manière encore plus préférentielle, le copolymère contient au plus 15% en mole d'unités du deuxième 1,3-diène.

Selon un mode de réalisation, le copolymère contient moins de 30% en mole d'unités du premier 1,3-diène.

Selon un autre mode de réalisation, le copolymère contient moins de 20% en mole d'unités du premier 1,3-diène.

De préférence, le copolymère contient moins de 20% en mole d'unités du premier 1,3-diène.

Selon un mode de réalisation de l'invention, le copolymère contient plus de 60% à 90% en mole d'unités éthylène et moins de 30% en mole, préférentiellement au plus 20% en mole d'unités du deuxième 1,3-diène, plus préférentiellement au plus 15% en mole d'unités du deuxième 1,3-diène. Selon ce mode de réalisation de l'invention, le copolymère contient préférentiellement moins de 30% en mole d'unités du premier 1,3-diène ou contient préférentiellement moins de 20% en mole d'unités du premier 1,3-diène.

Selon un autre mode de réalisation de l'invention, le copolymère contient de 70% à 90% en mole d'unités éthylène et moins de 30% en mole, préférentiellement au plus 20% en mole d'unités du deuxième 1,3-diène, plus

préférentiellement au plus 15% en mole d'unités du deuxième 1,3-diène. Selon ce mode de réalisation de l'invention, le copolymère contient préférentiellement moins de 20% en mole d'unités du premier 1,3-diène.

Selon encore un autre mode de réalisation de l'invention, le copolymère contient plus de 60% à 85% en mole d'unités éthylène et moins de 30% en mole, préférentiellement au plus 20% en mole, plus préférentiellement au plus 15% en mole d'unités du deuxième 1,3-diène. Selon ce mode de réalisation de l'invention, le copolymère contient préférentiellement moins de 30% en mole d'unités du premier 1,3-diène ou contient préférentiellement moins de 20% en mole d'unités du premier 1,3-diène.

Selon encore un autre mode de réalisation de l'invention, le copolymère contient de 70% à 85% en mole d'unités éthylène et moins de 30% en mole, préférentiellement au plus 20% en mole, plus préférentiellement au plus 15% en mole d'unités du deuxième 1,3-diène. Selon ce mode de réalisation de l'invention, le copolymère contient préférentiellement moins de 20% en mole d'unités du premier 1,3-diène.

Selon l'un quelconque des modes de réalisation de l'invention, le copolymère contient préférentiellement moins de 80% en mole d'unités éthylène.

Selon l'un quelconque des modes de réalisation de l'invention, le copolymère contient préférentiellement au moins 1% en mole d'unités du deuxième 1,3-diène, plus préférentiellement au moins 5% en mole d'unités du deuxième 1,3-diène.

Selon un mode de réalisation particulier de l'invention, en particulier lorsque le premier 1,3-diène est le 1,3-butadiène ou un mélange de 1,3-butadiène et d'isoprène, le copolymère contient en outre des motifs 1,2-cyclohexanediyle. La présence de ces structures cycliques dans le copolymère résulte d'une insertion très particulière de l'éthylène et de 1,3-butadiène lors de la polymérisation. La teneur en motifs 1,2-cyclohexanediyle dans le copolymère varie selon les teneurs respectives en éthylène et en 1,3-butadiène dans le copolymère. Le copolymère contient de préférence moins de 15% en mole d'unités de motif 1,2-cyclohexanediyle.

De préférence, le copolymère a une température de transition vitreuse inférieure à -35°C, préférentiellement comprise entre -70°C et -35°C.

Le copolymère peut être préparé par un procédé qui comprend la polymérisation d'un mélange d'éthylène, du premier 1,3-diène et du deuxième 1,3-diène en présence d'un système catalytique à base au moins d'un métallocène de formule (II) et d'un organomagnésien de formule (III)

$$P(Cp^1Cp^2)\ Nd(BH_4)_{(1+y)}\text{-}L_yN_x \qquad (II)$$

$$MgR^1R^2 \qquad (III)$$

$Cp^1$ et $Cp^2$, identiques ou différents, étant choisis dans le groupe constitué par le groupe cyclopentadiényle de formule $C_5H_4$, le groupe fluorényle non substitué de formule $C_{13}H_8$ et les groupes fluorényles substitués,
P étant un groupe pontant les deux groupes $Cp^1$ et $Cp^2$ et représentant un groupe $ZR^3R^4$, Z représentant un atome de silicium ou de carbone, $R^3$ et $R^4$, identiques ou différents, représentant chacun un groupe alkyle comprenant de 1 à 20 atomes de carbone, de préférence un méthyle,
y, nombre entier, étant égal ou supérieur à 0,
x, nombre entier ou non, étant égal ou supérieur à 0,
L représentant un métal alcalin choisi dans le groupe constitué par le lithium, le sodium et le potassium,
N représentant une molécule d'un éther, de préférence diéthyléther ou tétrahydrofuranne,
$R^1$ et $R^2$, identiques ou différents, représentant un groupe carboné.

A titre de groupes fluorényles substitués, on peut citer ceux substitués par des radicaux alkyles ayant 1 à 6 atomes de carbone ou par des radicaux aryles ayant 6 à 12 atomes de carbone. Le choix des radicaux est aussi orienté par l'accessibilité aux molécules correspondantes que sont les fluorènes substitués, parce que ces derniers sont disponibles commercialement ou facilement synthétisables.

A titre de groupes fluorényles substitués, on peut citer plus particulièrement les groupes 2,7-ditertiobutyle-fluorényle et 3,6-ditertiobutyle-fluorényle. Les positions 2, 3, 6 et 7 désignent respectivement la position des atomes de carbone des cycles comme cela est représenté dans le schéma ci-après, la position 9 correspondant à l'atome de carbone auquel est attaché le pont P.

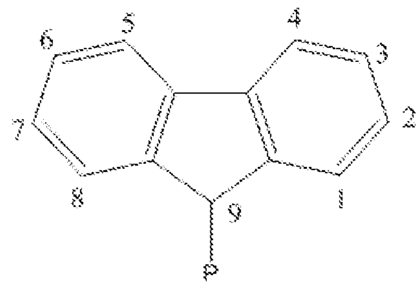

Le système catalytique peut être préparé de façon traditionnelle par un procédé analogue à celui décrit dans la demande de brevet WO 2007054224 ou WO 2007054223. Par exemple on fait réagir dans un solvant hydrocarboné l'organomagnésien et le métallocène typiquement à une température allant de 20 à 80°C pendant une durée comprise entre 5 et 60 minutes. Le système catalytique est généralement préparé dans un solvant hydrocarboné, aliphatique comme le méthylcyclohexane ou aromatique comme le toluène. Généralement après sa synthèse, le système catalytique est utilisé en l'état dans le procédé de synthèse du copolymère.

Alternativement, le système catalytique peut être préparé par un procédé analogue à celui décrit dans la demande de brevet WO 2017093654 A1 ou dans la demande de brevet WO 2018020122 A1. Selon cette alternative, le système catalytique contient en outre un monomère de préformation choisi parmi un diène conjugué, l'éthylène ou un mélange d'éthylène et d'un diène conjugué, auquel cas le système catalytique est à base au moins du métallocène, de l'organomagnésien et du monomère de préformation. Par exemple on fait réagir dans un solvant hydrocarboné l'organomagnésien et le métallocène typiquement à une température de 20 à 80°C pendant 10 à 20 minutes pour obtenir un premier produit de réaction, puis avec ce premier produit de réaction on fait réagir à une température allant de 40 à 90°C pendant 1h à 12h le monomère de préformation choisi parmi un diène conjugué, l'éthylène ou un mélange d'éthylène et d'un diène conjugué. Le système catalytique ainsi obtenu peut être utilisé de suite dans le procédé conforme à l'invention ou être stocké sous atmosphère inerte avant son utilisation dans le procédé de polymérisation pour préparer le copolymère.

Le métallocène utilisé pour préparer le système catalytique peut se trouver sous la forme de poudre cristallisée on non, ou encore sous la forme de monocristaux. Le métallocène peut se présenter sous une forme monomère ou dimère, ces formes dépendant du mode de préparation du métallocène, comme par exemple cela est décrit dans la demande de brevet WO 2007054224 ou WO 2007054223. Le métallocène peut être préparé de façon traditionnelle par un procédé analogue à celui décrit dans la demande de brevet WO 2007054224 ou WO 2007054223, notamment par réaction dans des conditions inertes et anhydres du sel d'un métal alcalin du ligand avec un borohydrure de terre rare dans un solvant adapté, tel un éther, comme le diéthyléther ou le tétrahydrofuranne ou tout autre solvant connu de l'homme de l'art. Après réaction, le métallocène est séparé des sous-produits de réaction par les techniques connues de l'homme de l'art, telles que la filtration ou la précipitation dans un second solvant. Le métallocène est au final séché et isolé sous forme solide.

Comme toute synthèse faite en présence de composé organométallique, la synthèse du métallocène et celle du système catalytique ont lieu dans des conditions anhydres sous atmosphère inerte. Typiquement, les réactions sont conduites à partir de solvants et de composés anhydres sous azote ou argon anhydre.

L'organomagnésien utilisé dans le système catalytique est de formule $MgR^1R^2$ dans laquelle $R^1$ et $R^2$, identiques ou différents, représentent un groupe carboné. On entend par groupe carboné un groupe qui contient un ou plusieurs atomes de carbone. De préférence, $R^1$ et $R^2$ contiennent 2 à 10 atomes de carbone. De manière plus préférentielle, $R^1$ et $R^2$ représentent chacun un alkyle. L'organomagnésien est avantageusement un dialkylmagnésien, mieux le butyléthylmagnésium ou le butyloctylmagnésium, encore mieux le butyloctylmagnésium.

Le rapport molaire de l'organomagnésien sur le métal Nd constituant le métallocène est de préférence compris dans un domaine allant de 1 à 100, de manière plus préférentielle est supérieur ou égal à 1 et inférieur à 10. La plage de valeurs allant de 1 à moins de 10 est notamment plus favorable pour l'obtention de copolymères de masses molaires élevées.

Lorsque le copolymère est un polymère qui comprend des motifs 1,2-cyclohexanediyle, il est préparé selon le procédé mentionné dans la présente demande en utilisant un métallocène de formule (II) dans laquelle $Cp^1$ et $Cp^2$, identiques ou différents, sont choisis dans le groupe constitué par les groupes fluorényles substitués et le groupe fluorényle non substitué de formule $C_{13}H_8$. Pour cette variante, conviennent en particulier les métallocènes de formules suivantes dans lesquelles le symbole Flu présente le groupe fluorényle de formule $C_{13}H_8$ : $[\{Me_2SiFlu_2Nd(\mu\text{-}BH_4)_2Li(THF)\}_2]$ ; $[Me_2SiFlu_2Nd(\mu\text{-}BH_4)_2Li(THF)]$; $[Me_2SiFlu_2Nd(\mu\text{-}BH_4)(THF)]$ ; $[\{Me_2SiFlu_2Nd(\mu\text{-}BH_4)(THF)\}_2]$ ; $[Me_2SiFlu_2Nd(\mu\text{-}BH_4)]$.

L'homme du métier adapte aussi les conditions de polymérisation et les concentrations en chacun des réactifs (constituants du système catalytique, monomères) selon le matériel (outils, réacteurs) utilisé pour conduire la polymérisation et les différentes réactions chimiques. Comme cela est connu de l'homme du métier, la polymérisation ainsi que

la manipulation des monomères, du système catalytique et du ou des solvants de polymérisation se font dans des conditions anhydres et sous atmosphère inerte. Les solvants de polymérisation sont typiquement des solvants hydrocarbonés, aliphatiques ou aromatiques.

La polymérisation est conduite de préférence en solution, en continu ou discontinu. Le solvant de polymérisation peut être un solvant hydrocarboné, aromatique ou aliphatique. A titre d'exemple de solvant de polymérisation, on peut citer le toluène et le méthylcyclohexane. Les monomères peuvent être introduits dans le réacteur contenant le solvant de polymérisation et le système catalytique ou inversement le système catalytique peut être introduit dans le réacteur contenant le solvant de polymérisation et les monomères. La copolymérisation est conduite typiquement dans des conditions anhydres et en l'absence d'oxygène, en présence éventuelle d'un gaz inerte. La température de polymérisation varie généralement dans un domaine allant de 30 à 150°C, préférentiellement de 30 à 120°C. De préférence, la copolymérisation est conduite à pression constante d'éthylène.

Au cours de la polymérisation de l'éthylène et des 1,3-diènes dans un réacteur de polymérisation, un ajout continu d'éthylène et des 1,3-diènes peut être réalisé dans le réacteur de polymérisation, auquel cas le réacteur de polymérisation est un réacteur alimenté. Ce mode de réalisation est tout particulièrement adapté pour la synthèse de copolymère statistique.

La polymérisation peut être stoppée par refroidissement du milieu de polymérisation ou par ajout d'un alcool. Le polymère peut être récupéré selon les techniques classiques connues de l'homme du métier comme par exemple par précipitation, par évaporation du solvant sous pression réduite ou par stripping à la vapeur d'eau.

Alternativement au lieu d'ajouter un alcool, on peut ajouter un agent de fonctionnalisation, auquel cas il est récupéré un polymère portant une fonction telle qu'une fonction amine, une fonction silanol ou une fonction alcoxysilane. Selon un mode réalisation particulier de l'invention, le copolymère porte une fonction amine, alcoxysilane ou silanol.

Selon une première variante dans laquelle la fonction portée par le polymère est une fonction amine, l'agent de fonctionnalisation est de préférence un composé de formule (IV),

$$Si(Fc^1)_{3-g}(Rc^2)_g(Rca) \qquad (IV)$$

les symboles $Fc^1$, identiques ou différents, représentant un groupe alcoxy,
les symboles $Rc^2$, identiques ou différents, représentant un atome d'hydrogène ou une chaîne hydrocarbonée,
le symbole Rca représentant une chaîne hydrocarbonée substituée par une fonction amine,
g étant un nombre entier allant de 0 à 1.

Le groupe alcoxy représenté par le symbole $Fc^1$ dans la formule (IV) est de préférence méthoxy ou éthoxy.

La fonction amine désignée dans le symbole Rca dans la formule (IV), à savoir la fonction amine de l'agent de fonctionnalisation est une fonction amine primaire protégée, une fonction amine secondaire protégée ou une fonction amine tertiaire. Comme groupes protecteurs des fonctions amine primaire et amine secondaire, on peut citer les groupes silyles, par exemple les groupes triméthylsilyle et terbutyldiméthylsilyle. De préférence, la fonction amine de l'agent de fonctionnalisation est une fonction amine tertiaire. Avantageusement, la fonction amine de l'agent de fonctionnalisation est une fonction amine tertiaire de formule $-N(R_B)_2$ dans laquelle chaque $R_B$ représente un alkyle, préférentiellement un méthyle ou un éthyle.

A titre d'agent de fonctionnalisation pour préparer un polymère portant une fonction amine selon la première variante, on peut citer les composés (N,N-diméthyl-3-aminopropyl)méthyldiméthoxysilane, (N,N-diméthyl-3-aminopropyl)méthyldiéthoxysilane, (N,N-diméthyl-3-aminopropyl)éthyldiméthoxysilane, (N,N-diméthyl-3-aminopropyl)éthyl-diéthoxysilane, (N,N-diméthylaminopropyl)triméthoxysilane, (N,N-diméthylaminopropyl)triéthoxysilane et (N-(3-triméthoxysilyl)propyl)-N-(triméthylsilyl)silanamine, (N-(3-triéthoxysilyl)propyl)-N-(triméthylsilyl)silanamine, de préférence (N,N-diméthyl-3-aminopropyl)méthyldiméthoxysilane, (N,N-diméthyl-3-aminopropyl)éthyldiméthoxysilane, (N,N-diméthylaminopropyl)triméthoxysilane et (N-(3-triméthoxysilyl)-propyl)-N-(triméthylsilyl)silanamine, de manière plus préférentielle (N,N-diméthylaminopropyl)triméthoxysilane et (N-(3-triméthoxysilyl)propyl)-N-(triméthylsilyl)-silanamine.

Selon une deuxième variante dans laquelle la fonction portée par le polymère est une fonction silanol ou alcoxysilane, l'agent de fonctionnalisation est de préférence un composé de formule (V),

$$Si(Fc^1)_{4-g}(Rc^2)_g \qquad (V)$$

les symboles $Fc^1$, identiques ou différents, représentant un groupe alcoxy ou un atome d'halogène, les symboles $Rc^2$, identiques ou différents, représentant un atome d'hydrogène, une chaîne hydrocarbonée ou une chaîne hydrocarbonée substituée par une fonction chimique $Fc^2$, g étant un nombre entier allant de 0 à 2.

Lorsque le symbole $Fc^1$ représente un groupe alcoxy dans la formule (V), le groupe alcoxy est de préférence méthoxy ou éthoxy. Lorsque le symbole $Fc^1$ représente un atome d'halogène dans la formule (V), l'atome d'halogène est de préférence le chlore.

Parmi les chaînes hydrocarbonées représentées par les symboles $Rc^2$ dans les formules (V), on peut citer les alkyles, de préférence les alkyles ayant au plus 6 atomes de carbone, de manière plus préférentielle méthyle ou éthyle, mieux méthyle.

Parmi les chaînes hydrocarbonées substituées par une fonction chimique $Fc^2$ qui sont représentées par les symboles $Rc^2$ dans les formules (V), on peut citer les chaînes alcanediyles, de préférence celles comportant au plus 6 atomes de carbone, de manière plus préférentielle le groupe 1,3-propanediyle, le groupe alcanediyle portant un substituant, la fonction chimique $Fc^2$, autrement dit, une valence de la chaîne alcanediyle pour la fonction $Fc^2$, l'autre valence pour l'atome de silicium de la fonction méthoxysilane.

Dans les formules (V), on entend par fonction chimique un groupe qui est différent d'un groupe hydrocarboné saturé et qui peut participer à des réactions chimiques. L'homme du métier comprend que la fonction chimique $Fc^2$ dans la formule (V) est un groupe chimiquement inerte vis-à-vis des espèces chimiques présentes dans le milieu de polymérisation. La fonction chimique $Fc^2$ dans la formule (V) peut être sous une forme protégée, comme par exemple dans le cas de la fonction amine primaire, amine secondaire ou thiol. A titre de fonction chimique $Fc^2$, peuvent être citées les fonctions éther, thioéther, amine primaire protégée, amine secondaire protégée, amine tertiaire, thiol protégé, silyle. De préférence, la fonction chimique $Fc^2$ dans la formule (V) est une fonction amine primaire protégée, une fonction amine secondaire protégée, une fonction amine tertiaire ou une fonction thiol protégée. Comme groupes protecteurs des fonctions amine primaire, amine secondaire et thiol, on peut citer les groupes silyles, par exemple les groupes triméthylsilyle et terbutyldiméthylsilyle.

A titre d'agent de fonctionnalisation pour préparer un polymère portant une fonction silanol ou alcoxysilane selon la deuxième variante, on peut citer les composés diméthoxydiméthylsilane, diéthoxydiméthylsilane, diméthoxydiéthylsilane, diéthoxydiéthylsilane, (N,N-diméthyl-3-aminopropyl)méthyldiméthoxysilane, (N,N-diméthyl-3-aminopropyl)méthyldiéthoxysilane, (N,N-diméthyl-3-aminopropyl)éthyldiméthoxysilane, (N,N-diméthyl-3-aminopropyl)éthyl-diéthoxysilane, 3-méthoxy-3,8,8,9,9-pentaméthyl-2-oxa-7-thia-3,8-disiladecane, triméthoxy-méthylsilane, triéthoxyméthylsilane, triméthoxyéthylsilane, triéthoxyéthylsilane, (N,N-diméthylaminopropyl)triméthoxysilane, le (N,N-diméthylaminopropyl) triéthoxysilane, (N-(3-triméthoxysilyl)propyl)-N-(triméthylsilyl)silanamine, (N-(3-triéthoxysilyl)propyl)-N-(triméthylsilyl)silanamine et 3,3-diméthoxy-8,8,9,9-tétraméthyl-2-oxa-7-thia-3,8-disiladecane, de préférence diméthoxydiméthylsilane, diméthoxydiéthylsilane, (N,N-diméthyl-3-aminopropyl)méthyldiméthoxysilane, (N,N-diméthyl-3-aminopropyl)éthyldiméthoxysilane, 3-méthoxy-3,8,8,9,9-pentaméthyl-2-oxa-7-thia-3,8-disiladecanetriméthoxyméthylsilane, triméthoxyéthylsilane, (N,N-diméthylaminopropyl)triméthoxysilane, (N-(3-triméthoxysilyl)-propyl)-N-(triméthylsilyl)silanamine et 3,3-diméthoxy-8,8,9,9-tétraméthyl-2-oxa-7-thia-3,8-disiladecane, de manière plus préférentielle triméthoxyméthylsilane, triméthoxyéthylsilane, (N,N-diméthylaminopropyl)triméthoxysilane, (N-(3-triméthoxysilyl)propyl)-N-(triméthylsilyl)-silanamine et 3,3-diméthoxy-8,8,9,9-tétraméthyl-2-oxa-7-thia-3,8-disiladecane.

Qu'il s'agisse de la première ou de la deuxième variante, l'agent de fonctionnalisation est ajouté typiquement au milieu de polymérisation. Il est typiquement ajouté au milieu de polymérisation à un taux de conversion des monomères choisi par l'homme du métier selon la macrostructure souhaitée du copolymère. L'étape de polymérisation étant conduite généralement sous pression d'éthylène, un dégazage du réacteur de polymérisation peut être réalisé avant l'ajout de l'agent de fonctionnalisation. L'agent de fonctionnalisation est ajouté dans des conditions inertes et anhydres au milieu de polymérisation, maintenu à la température de polymérisation. Il est typiquement utilisé de 0.25 à 10 moles d'agent de fonctionnalisation pour 1 mole de co-catalyseur, de préférence de 2 à 4 moles d'agent de fonctionnalisation pour 1 mole de co-catalyseur. L'agent de fonctionnalisation est mis en contact avec le milieu de polymérisation pendant un temps suffisant pour permettre la réaction de fonctionnalisation. Ce temps de contact est choisi judicieusement par l'homme du métier en fonction de la concentration du milieu réactionnel et de la température du milieu réactionnel. Typiquement, la réaction de fonctionnalisation est conduite sous agitation, à une température allant de 17 à 80°C, pendant 0.01 à 24 heures.

Lorsque l'agent de fonctionnalisation porte une fonction protégée telle que décrite précédemment, l'étape de fonctionnalisation du polymère peut être suivie d'une réaction d'hydrolyse pour former un copolymère portant une fonction déprotégée, comme une amine primaire, une amine secondaire ou une fonction thiol.

Une réaction d'hydrolyse peut également suivre la réaction de fonctionnalisation du polymère lorsque la réaction de fonctionnalisation conduit à la formation d'un polymère portant une fonction alcoxysilane. L'hydrolyse du polymère portant une fonction alcoxysilane conduit à la préparation d'un polymère portant une fonction silanol.

La composition de caoutchouc selon l'invention comprend plus de 50 à 100 pce d'un copolymère d'éthylène, d'un premier 1,3-diène et d'un deuxième 1,3-diène, copolymère tel que défini dans l'un des quelconques modes de réalisation décrits précédemment, y compris leurs variantes. Il est entendu que le copolymère d'éthylène, d'un premier 1,3-diène et d'un deuxième 1,3-diène peut être constitué par un mélange de copolymères d'éthylène, d'un premier 1,3-diène et d'un deuxième 1,3-diène qui se différencient les uns des autres par leur microstructure ou par leur macrostructure. Lorsque le taux du copolymère est supérieur à 50 pce et inférieur à 100 pce, le complément à 100 pce peut être assuré par un autre élastomère, en particulier un autre élastomère diénique connu de l'homme du métier. Cet autre élastomère diénique peut être un élastomère conventionnellement utilisé dans les compositions de caoutchouc pour pneumatique tel que les polybutadiènes, les polyisoprènes, les copolymères de 1,3-butadiène et les copolymères d'isoprène. Selon un mode de

réalisation préférentiel, la composition de caoutchouc comprend 100 pce d'un copolymère d'éthylène, d'un premier 1,3-diène et d'un deuxième 1,3-diène, copolymère tel que défini dans l'un des quelconques modes de réalisation décrits précédemment, y compris leurs variantes.

La composition de caoutchouc conforme à l'invention a pour autre caractéristique essentielle de comprendre une charge renforçante. La composition de caoutchouc peut comprendre tout type de charge dite renforçante, connue pour ses capacités à renforcer une composition de caoutchouc utilisable pour la fabrication de pneumatiques, par exemple une charge organique telle que du noir de carbone, une charge inorganique renforçante telle que de la silice à laquelle est associé de manière connue un agent de couplage, ou encore un mélange de ces deux types de charge. Une telle charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

Le taux de charge renforçante est ajusté par l'homme du métier en fonction de l'usage de la composition de caoutchouc. Selon un mode de réalisation de l'invention, le taux de charge renforçante dans la composition de caoutchouc est supérieur ou égal à 30 pce et inférieur ou égal à 200 pce, de préférence supérieur ou égal à 35 pce et inférieur ou égal à 100 pce.

La charge renforçante peut être une silice, un noir de carbone ou un mélange d'un noir de carbone et d'une silice. De préférence, la charge renforçante comprend une silice qui représente plus de 50% en masse de la charge renforçante. De manière plus préférentielle, la silice représente plus de 85% en masse de la charge renforçante.

La silice utilisée peut être toute silice renforçante connue de l'homme du métier, notamment toute silice précipitée ou pyrogénée présentant une surface spécifique BET ainsi qu'une surface spécifique CTAB toutes deux inférieures à 450 $m^2/g$, de préférence comprises dans un domaine allant de 30 à 400 $m^2/g$, notamment de 60 à 300 $m^2/g$. Dans le présent exposé, la surface spécifique BET est déterminée par adsorption de gaz à l'aide de la méthode de Brunauer-Emmett-Teller décrite dans « The Journal of the American Chemical Society » (Vol. 60, page 309, février 1938), et plus précisément selon une méthode adaptée de la norme NF ISO 5794-1, annexe E de juin 2010 [méthode volumétrique multipoints (5 points) - gaz: azote - dégazage sous vide: une heure à 160°C - domaine de pression relative p/po : 0,05 à 0,17].

Les valeurs de surface spécifique CTAB ont été déterminées selon la norme NF ISO 5794-1, annexe G de juin 2010. Le procédé est basé sur l'adsorption du CTAB (bromure de N-hexadécyl-N,N,N-triméthylammonium) sur la surface « externe » de la charge renforçante.

On peut utiliser tout type de silice précipitée, notamment des silices précipitées hautement dispersibles (dites « HDS » pour « highly dispersible » ou « highly dispersible silica »). Ces silices précipitées, hautement dispersibles ou non, sont bien connues de l'homme du métier. On peut citer, par exemple, les silices décrites dans les demandes WO03/016215-A1 et WO03/016387-A1. Parmi les silices HDS commerciales, on peut notamment utiliser les silices « Ultrasil ® 5000GR », « Ultrasil ® 7000GR » de la société Evonik, les silices « Zeosil ® 1085GR», « Zeosil® 1115 MP », « Zeosil® 1165MP », « Zeosil® Premium 200MP », « Zeosil® HRS 1200 MP » de la Société Solvay. À titre de silice non HDS, les silices commerciales suivantes peuvent être utilisées : les silices « Ultrasil ® VN2GR », « Ultrasil ® VN3GR » de la société Evonik, la silice « Zeosil® 175GR » » de la société Solvay, les silices « Hi-Sil EZ120G(-D) », « Hi-Sil EZ160G(-D) », « Hi-Sil EZ200G(-D) », « Hi-Sil 243LD », « Hi-Sil 210 », « Hi-Sil HDP 320G » de la société PPG.

La silice peut être un mélange de différentes silices, auquel cas les proportions de silice dans la charge renforçante se rapportent à l'ensemble des silices.

Comme noirs de carbone conviennent tous les noirs de carbone, notamment les noirs conventionnellement utilisés dans les pneumatiques ou leurs bandes de roulement. Parmi ces derniers, on citera plus particulièrement les noirs de carbone renforçants des séries 100, 200, 300, ou les noirs de série 500, 600 ou 700 (grades ASTM D-1765-2017), comme par exemple les noirs N115, N134, N234, N326, N330, N339, N347, N375, N550, N683, N772. Ces noirs de carbone peuvent être utilisés à l'état isolé, tels que disponibles commercialement, ou sous tout autre forme, par exemple comme support de certains des additifs de caoutchouterie utilisés.

Le noir de carbone peut être un mélange de différents noirs de carbone, auquel cas les taux de noir de carbone se rapportent à l'ensemble des noirs de carbone.

Selon l'un quelconque des modes de réalisation de l'invention, le noir de carbone est utilisé de préférence à un taux inférieur ou égal à 20 pce, plus préférentiellement inférieur ou égal à 10 pce (par exemple le taux de noir de carbone peut être compris dans un domaine allant de 0,5 à 20 pce, notamment allant de 1 à 10 pce). Avantageusement, le taux de noir de carbone dans la composition de caoutchouc est inférieur ou égal à 5 pce. Dans les intervalles indiqués, on bénéficie des propriétés colorantes (agent de pigmentation noir) et anti-UV des noirs de carbone, sans pénaliser par ailleurs les performances typiques apportées par la silice.

Pour coupler la charge inorganique renforçante, en l'espèce la silice, à l'élastomère, on peut utiliser de manière bien connue un agent de couplage (ou agent de liaison) au moins bifonctionnel destiné à assurer une connexion suffisante, de nature chimique et/ou physique, entre la charge inorganique (surface de ses particules) et l'élastomère, auquel cas la composition de caoutchouc comprend un agent de couplage pour lier la silice à l'élastomère. On utilise en particulier des organosilanes ou des polyorganosiloxanes au moins bifonctionnels. Par « bifonctionnel », on entend un

composé possédant un premier groupe fonctionnel capable d'interagir avec la charge inorganique et un second groupe fonctionnel capable d'interagir avec l'élastomère.

On utilise notamment des silanes polysulfurés, dits « symétriques » ou « asymétriques » selon leur structure particulière, tels que décrits par exemple dans les demandes WO03/002648-A1 (ou US2005/016651-A1) et WO03/002649-A1 (ou US2005/016650-A1). Conviennent en particulier, sans que la définition ci-après soit limitative, des silanes polysulfurés répondant à la formule générale (IV) suivante dans laquelle:

$$Z\text{-}A\text{-}S_x\text{-}A\text{-}Z \qquad \text{(IV)}$$

- x est un entier de 2 à 8 (de préférence de 2 à 5) ;
- les symboles A, identiques ou différents, représentent un radical hydrocarboné divalent (de préférence un groupement alkylène en $C_1$-$C_{18}$ ou un groupement arylène en $C_6$-$C_{12}$, plus particulièrement un alkylène en $C_1$-$C_{10}$, notamment en un alkylène en $C_1$-$C_4$, en particulier le propylène) ;
- les symboles Z, identiques ou différents, répondent à l'une des trois formules ci-après :

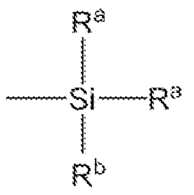
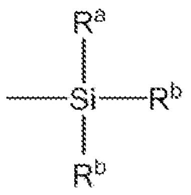
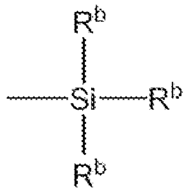

dans lesquelles :

- les radicaux $R^a$, substitués ou non substitués, identiques ou différents entre eux, représentent un groupe alkyle en $C_1$-$C_{18}$, un groupe cycloalkyle en $C_3$-$C_{18}$ ou un groupe aryle en $C_6$-$C_{18}$ (de préférence des groupes alkyle en $C_1$-$C_6$, le cyclohexyle ou le phényle, notamment des groupes alkyle en $C_1$-$C_4$, plus particulièrement le méthyle et/ou l'éthyle),
- les radicaux $R^b$, substitués ou non substitués, identiques ou différents entre eux, représentent un groupe alkoxyle en $C_1$-$C_{18}$ ou un groupe cycloalkoxyle en $C_3$-$C_{18}$ (de préférence un groupe choisi parmi les alkoxyles en $C_1$-$C_8$ et les cycloalkoxyles en $C_5$-$C_8$, plus préférentiellement encore un groupe choisi parmi les alkoxyles en $C_1$-$C_4$, en particulier le méthoxyle et l'éthoxyle), ou un groupe hydroxyle, ou tel que 2 radicaux Rb représentent un groupe dialkoxyle en $C_3$-$C_{18}$.

Dans le cas d'un mélange d'alkoxysilanes polysulfurés répondant à la formule (V) ci-dessus, notamment des mélanges usuels disponibles commercialement, la valeur moyenne des « x » est un nombre fractionnaire de préférence compris dans un domaine allant de 2 à 5, plus préférentiellement proche de 4.

A titre d'exemples de silanes polysulfurés, on citera plus particulièrement les polysulfures (notamment disulfures, trisulfures ou tétrasulfures) de bis-(alkoxyl($C_1$-$C_4$)-alkyl($C_1$-$C_4$)silyl-alkyl($C_1$-$C_4$)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule $[(C_2H_3O)_3Si(CH_2)_3S_2]_2$ commercialisé sous la dénomination « Si69 » par la société Evonik ou le disulfure de bis-(triéthoxysilylpropyle), en abrégé TESPD, de formule $[(C_2H_3O)_3Si(CH_2)_3S]_2$ commercialisé sous la dénomination « Si75 » par la société Evonik. On citera également à titre d'exemples préférentiels les polysulfures (notamment disulfures, trisulfures ou tétrasulfures) de bis-(monoalkoxyl($C_1$-$C_4$)-dialkyl($C_1$-$C_4$)silylpropyle), plus particulièrement le tétrasulfure de bis-monoéthoxydiméthylsilylpropyle tel que décrit dans la demande de brevet WO02/083782-A1 précitée (ou US7217751-B2).

Bien entendu pourraient être également utilisés des mélanges des agents de couplage précédemment décrits.

La teneur en agent de couplage dans la composition de l'invention est avantageusement inférieure ou égale à 25 pce, étant entendu qu'il est en général souhaitable d'en utiliser le moins possible. Typiquement le taux d'agent de couplage représente de 0,5% à 15% en poids par rapport à la quantité de charge inorganique renforçante. Son taux est préférentiellement compris dans un domaine allant de 0,5 à 20 pce, plus préférentiellement compris dans un domaine allant de 3 à 15 pce. Ce taux est aisément ajusté par l'homme du métier selon le taux de charge inorganique renforçante utilisé dans la composition de l'invention.

Le système de réticulation utile aux besoins de l'invention est un système de vulcanisation, c'est-à-dire à base de soufre et d'un accélérateur de vulcanisation. Le soufre est typiquement apporté sous forme de soufre moléculaire ou d'un agent donneur de soufre, de préférence sous forme moléculaire. Le soufre sous forme moléculaire est aussi désigné sous l'appellation de soufre moléculaire. On entend par donneur de soufre tout composé qui libère des atomes de soufre, combinés ou pas sous la forme d'une chaîne polysulfure, aptes à s'insérer dans les chaînes polysulfures formées au cours

de la vulcanisation et pontant les chaînes élastomères. Au système de vulcanisation peuvent s'ajouter, incorporés au cours de la première phase non-productrice et/ou au cours de la phase productive, divers activateurs de vulcanisation connus tels qu'oxyde de zinc, acide stéarique, dérivés guanidiques (en particulier diphénylguanidine), etc. Le taux de soufre est de préférence compris entre 0,5 et 3,0 pce, celui de l'accélérateur est de préférence compris entre 0,5 et 5,0 pce. Ces taux préférentiels peuvent s'appliquer à l'un quelconque des modes de réalisation de l'invention.

On peut utiliser comme accélérateur de vulcanisation (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types sulfénamides pour ce qui est des accélérateurs primaires, du type thiurames, dithiocarbamates, dithiophosphates, thiourées et xanthates pour ce qui est des accélérateurs secondaires.

La vulcanisation, est conduite de manière connue à une température généralement comprise entre 130°C et 200°C.

La composition de caoutchouc conforme à l'invention peut contenir en outre d'autres additifs connus pour être utilisés dans des compositions de caoutchouc pour pneumatiques, tels que des plastifiants tels que des huiles ou des résines hydrocarbonées, des anti-ozonants, des antioxydants.

Comme huile conviennent notamment les huiles non aromatiques ou faiblement aromatiques, par exemple les huiles aliphatiques, les huiles paraffiniques, les huiles MES, les huiles TDAE, les huiles TRAE, les huiles SRAE, les huiles minérales et leurs mélanges.

Les résines hydrocarbonées, appelées aussi résines plastifiantes hydrocarbonées, sont des polymères bien connus de l'homme du métier, essentiellement à base de carbone et d'hydrogène mais pouvant comporter d'autres types d'atomes, par exemple l'oxygène, utilisables en particulier comme agents plastifiants ou agents tackifiants dans des matrices polymériques. Elles sont par nature au moins partiellement miscibles (i.e., compatibles) aux taux utilisés avec les compositions de polymères auxquelles elles sont destinées, de manière à agir comme de véritables agents diluants. Elles ont été décrites par exemple dans l'ouvrage intitulé "Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. "Rubber Tires and Mechanical Goods"). De manière connue, ces résines hydrocarbonées peuvent être qualifiées aussi de résines thermoplastiques en ce sens qu'elles se ramollissent par chauffage et peuvent ainsi être moulées.

Selon un mode de réalisation particulier de l'invention, la composition de caoutchouc comprend une résine hydrocarbonée plastifiante. Ce mode de réalisation est préférentiel lorsque la composition de caoutchouc est utilisée dans une bande de roulement pour pneumatique.

Le taux de plastifiant dans la composition de caoutchouc est ajusté par l'homme du métier selon la nature du plastifiant en fonction du taux de charge renforçante et de l'usage auquel est destinée la composition de caoutchouc.

La composition de caoutchouc conforme à l'invention est typiquement fabriquée dans des mélangeurs appropriés, en utilisant deux phases de préparation successives bien connues de l'homme du métier : une première phase de travail ou malaxage thermomécanique (phase dite « non-productive ») à haute température, jusqu'à une température maximale comprise entre 130°C et 200°C, suivie d'une seconde phase de travail mécanique (phase dite « productive ») jusqu'à une plus basse température, typiquement inférieure à 110°C, par exemple entre 40°C et 100°C, phase de finition au cours de laquelle est incorporé le système de réticulation.

La composition de caoutchouc conforme à l'invention, pouvant être soit à l'état cru (avant réticulation ou vulcanisation), soit à l'état cuit (après réticulation ou vulcanisation), peut être utilisée dans un article semi-fini pour pneumatique, préférentiellement dans une bande de roulement pour pneumatique.

Autre objet de l'invention, le pneumatique qui comporte une bande de roulement, comprend une composition de caoutchouc conforme à l'invention définie sous l'un quelconque des modes de réalisation de l'invention, de préférence dans sa bande de roulement.

Les caractéristiques précitées de la présente invention, ainsi que d'autres, seront mieux comprises à la lecture de la description suivante de plusieurs exemples de réalisation de l'invention, donnés à titre illustratif et non limitatif.

## Exemples

I-Caractérisation des polymères :

I-1) Détermination de la microstructure des polymères :

a) Détermination de la microstructure des copolymères Ethylène-Butadiène-Myrcène :

La caractérisation spectrale et les mesures de la microstructure de copolymère Ethylène-Butadiène-Myrcène sont réalisées par spectroscopie de Résonance Magnétique Nucléaire (RMN).

Pour ces mesures, un spectromètre Bruker Avance III HD 400 MHz est utilisé, équipé d'une sonde Bruker cryo-BBFO z-grad 5 mm. Les expériences 1H sont enregistrées à l'aide d'une impulsion radiofréquence avec un angle de basculement de 30°, le nombre de répétitions est de 128 avec un délai de recyclage de 5 secondes. Les expériences RMN de corrélation 1H-13C HSQC (Heteronuclear Single Quantum Coherence) et HMBC (Heteronuclear Multiple-Bond Correlation) sont enregistrées avec un nombre de répétitions de 128 et un nombre d'incréments de 128. Les expériences sont réalisées à 25 °C.

25 mg d'échantillon sont solubilisés dans 1 mL d'orthodichlorobenzène deutéré (ODCB).

Les axes des déplacements chimiques 1H et 13C sont calibrés par rapport à l'impureté protonée du solvant à $\delta$1H = 7,2 ppm (pour le signal le plus déblindé) et $\delta$13C = 127 ppm (pour le signal le moins déblindé).

Les unités monomères possibles dans le copolymère sont $-CH_2-CH(CH=CH_2)-$,$-CH_2-CH=CH-CH_2-$, $-CH_2-CH_2-$, le motif 1,2-cyclohexanediyle et les structures suivantes, $R_1$ et $R_2$ représentant la chaîne polymère :

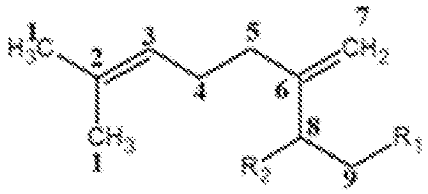

A

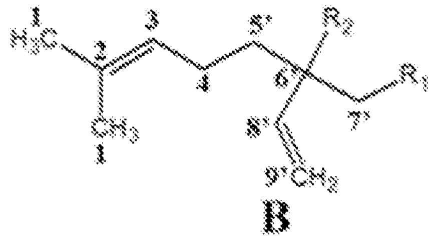

B

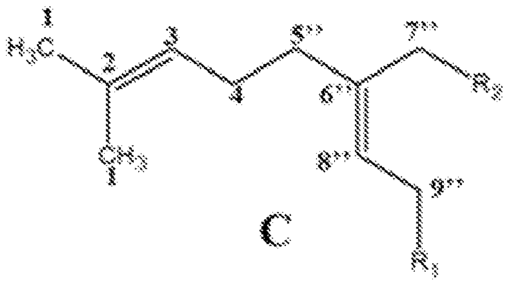

C

Le motif 1,2-cyclohexanediyle est de structure suivante :

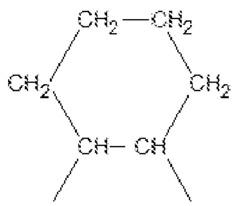

Les signaux des formes d'insertion du myrcène A ont été observés sur les différents spectres enregistrés. D'après S. Georges *et al.* (S.Georges, M.Bria, P. Zinck and M. Visseaux. Polymer 55 (2014) 3869-3878), le signal du groupement -CH= n°8" caractéristique de la forme C présente des déplacements chimiques $^{1}$H et $^{13}$C identiques au groupement -CH= n°3.

Les déplacements chimiques des signaux caractéristiques du polymère sont présentés dans le tableau 1 (Attribution des signaux $^{1}$H et $^{13}$C des copolymères Ethylène-Butadiène-Myrcène autres que ceux des unités du 1,3-butadiène).

Tableau 1

| $\delta^1$H (ppm) | $\delta^{13}$C (ppm) | Groupement |
|---|---|---|
| 5.19 | 125.1 | 3 + 8" |
| 4.86 | 109.0 | 7 |
| 1.59 et 1.68 | 247 et 17.6 | 1 |
| 1.3 | 37.5 - 24.0 | $CH_2$ éthylène |

Les quantifications ont été effectuées à partir de l'intégration des spectres RMN 1D $^1H$ à l'aide du logiciel Topspin.
Les signaux intégrés pour la quantification des différents motifs sont :

Ethylène : Totalité des signaux entre 0.5 ppm et 3.0 ppm en soustrayant les contributions aliphatiques des autres motifs du copolymère. Le calcul correspond à 4 protons du motif Ethylène.
Forme A : signal n°7 (4.86 ppm) correspondant à 2 protons.
La proportion de forme C n'est pas accessible directement mais peut être calculée à partir du signal n°3+8" en soustrayant la contribution de la forme A.
PB1-4 : Signal entre 5.71 ppm et 5.32 ppm correspond à 2 protons (en retirant la contribution PB1-2).
PB1-2 : signal entre 5.11 ppm et 4.92 ppm correspond à 2 protons.
Cycles cyclohexane (motif 1,2-cyclohexanediyle) : signal entre 1.80 ppm et 1.70 ppm correspond à 2 protons.

La quantification de la microstructure est réalisée en pourcentage molaire (% molaire) comme suit :

$$\text{\% molaire d'un motif} = \text{intégrale } ^1H \text{ d'un motif} * 100 / \Sigma (\text{intégrale } ^1H \text{ de chaque motif}).$$

b) Détermination de la microstructure des copolymères éthylène-butadiène-farnésène :

La caractérisation spectrale et les mesures de la microstructure de copolymère Ethylène-butadiène-farnésène sont réalisées par spectroscopie de Résonance Magnétique Nucléaire (RMN). Pour ces mesures, un spectromètre Bruker Avance III HD 400 MHz est utilisé, équipé d'une sonde Bruker cryo-BBFO z-grad 5 mm. Les expériences 1H sont enregistrées à l'aide d'une impulsion radiofréquence avec un angle de basculement de 30°, le nombre de répétitions est de 128 avec un délai de recyclage de 5 secondes. Les expériences RMN de corrélation 1H-13C HSQC (Heteronuclear Single Quantum Coherence) et HMBC (Heteronuclear Multiple-Bond Correlation) sont enregistrées avec un nombre de répétitions de 128 et un nombre d'incréments de 128. Les expériences sont réalisées à 25 °C. 25 mg d'échantillon sont solubilisés dans 1 mL d'orthodichlorobenzène deutéré (ODCB). Les axes des déplacements chimiques $^1H$ et $^{13}C$ sont calibrés par rapport à l'impureté protonée du solvant à $\delta_{1H}$ = 7,2 ppm (pour le signal le plus déblindé) et $\delta_{13C}$ = 127 ppm (pour le signal le moins déblindé).
Les unités monomères possibles dans le copolymère sont $-CH_2-CH(CH=CH_2)-$,$-CH_2-CH=CH-CH_2-$, $-CH_2-CH_2-$, le motif 1,2-cyclohexanediyle et les structures suivantes, $R_1$ et $R_2$ représentant la chaîne polymère :

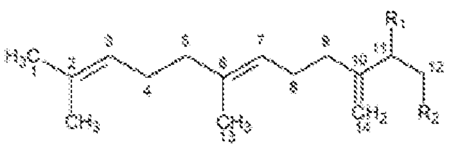
A

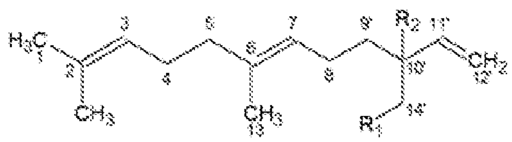
B

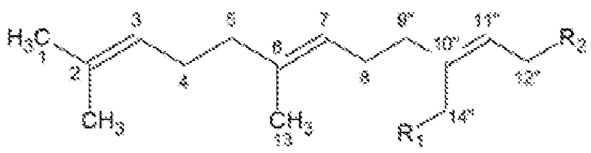
C

Les signaux de la forme d'insertion du farnésène A ont été observés sur les différents spectres enregistrés. Le signal du groupement -CH= n°11" caractéristique de la forme C présente des déplacements chimiques $^1H$ et $^{13}C$ identiques aux groupements -CH= n°3 et n°7.
Les déplacements chimiques des signaux caractéristiques du polymère sont présentés dans le tableau 2 (Attribution des signaux $^1H$ et $^{13}C$ des copolymères Ethylène-Butadiène-Farnesène autres que ceux des unités du 1,3-butadiène).

Tableau 2

| $\delta^1H$ (ppm) | $\delta^{13}C$ (ppm) | Groupement |
|---|---|---|
| 5.25 | 125.0 | 7 |
| 5.15 | 125.0 | 3, 11" |

(suite)

| $\delta^1H$ (ppm) | $\delta^{13}C$ (ppm) | Groupement |
|---|---|---|
| 4.87 | 109.0 | 14 |
| 1.59 et 1.67 | 24.6 et 17.5 | 1, 13 |
| 1.28 | 38 - 24.0 | $CH_2$ éthylène |

Les quantifications ont été effectuées à partir de l'intégration des spectres RMN 1D $^1H$ à l'aide du logiciel Topspin.

Les signaux intégrés pour la quantification des différents motifs sont :

Motif farnesène forme A à partir du signal **n°14 $CH_2$=** pour 2 protons,
Motif farnesène forme C à partir des signaux **n°3,11" et n°7 CH=** (en soustrayant la contribution de la forme A), pour 2 protons,
Motif farnesène forme B : à partir du signal **n°11',** propre à cette forme, pour 1 proton.
PB1-4 : Signal entre 5.71 ppm et 5.32 ppm correspond à 2 protons (en retirant la contribution PB1-2).
PB1-2 : signal entre 5.11 ppm et 4.92 ppm correspond à 2 protons.
Cycles cyclohexane (motif 1,2-cyclohexanediyle) : signal entre 1.80 ppm et 1.70 ppm correspond à 2 protons.
Motif Ethylène en intégrant la totalité des signaux aliphatiques (de ~ 0.5 à 3 ppm) et en soustrayant la contribution de tous les autres motifs aliphatiques (PB1-4, PB1-2, cycle EBR, farnesène forme A et C).

La quantification de la microstructure est réalisée en pourcentage molaire (% molaire) comme suit :

$$\text{\% molaire d'un motif} = \text{intégrale } ^1H \text{ d'un motif} * 100 / \Sigma \text{ (intégrales } ^1H \text{ de chaque motif)}$$

I-2) Détermination de la température de transition vitreuse des polymères :

La température de transition vitreuse est mesurée au moyen d'un calorimètre différentiel ("Differential Scanning Calorimeter") selon la norme ASTM D3418 (1999).

I-3) Détermination de la macrostructure des polymères par chromatographie d'exclusion stérique (SEC) :

a) Principe de la mesure :

La chromatographie d'exclusion stérique ou SEC (Size Exclusion Chromatography) permet de séparer les macromolécules en solution suivant leur taille à travers des colonnes remplies d'un gel poreux. Les macromolécules sont séparées suivant leur volume hydrodynamique, les plus volumineuses étant éluées en premier.

Associée à 3 détecteurs (3D), un réfractomètre, un viscosimètre et un détecteur de diffusion de la lumière à 90°, la SEC permet d'appréhender la distribution de masses molaires absolues d'un polymère. Les différentes masses molaires absolues moyennes en nombre (Mn), en poids (Mw) et la dispersité (D = Mw/Mn) peuvent également être calculées.

b) Préparation du polymère :

Chaque échantillon est solubilisé dans du tétrahydrofurane à une concentration d'environ 1 g/L. Puis la solution est filtrée sur filtre de porosité 0.45$\mu$m avant injection.

c) Analyse SEC 3D :

Pour déterminer la masse molaire moyenne en nombre (Mn), et le cas échant la masse molaire moyenne en poids (Mw) et l'indice de polydispersité (Ip) des polymères, on utilise la méthode ci-dessous.

La masse molaire moyenne en nombre (Mn), la masse molaire moyenne en poids (Mw) et l'indice de polydispersité du polymère (ci-après échantillon) sont déterminés de manière absolue, par chromatographie d'exclusion stérique (SEC : Size Exclusion Chromatography) triple détection. La chromatographie d'exclusion stérique triple détection présente l'avantage de mesurer des masses molaires moyennes directement sans calibration.

La valeur de l'incrément d'indice de réfraction dn/dc de la solution de l'échantillon est mesurée en ligne en utilisant l'aire du pic détecté par le réfractomètre (RI) de l'équipement de chromatographie liquide. Pour appliquer cette méthode, il faut vérifier que 100% de la masse d'échantillon est injectée et éluée au travers de la colonne. L'aire du pic RI dépend de la concentration de l'échantillon, de la constante du détecteur RI et de la valeur du dn/dc.

Pour déterminer les masses molaires moyennes, on utilise la solution à 1g/l précédemment préparée et filtrée que l'on injecte dans le système chromatographique. L'appareillage utilisé est une chaîne chromatographique « WATERS alliance ». Le solvant d'élution est le tétrahydrofurane contenant 250 ppm de BHT (2,6-diter-butyle 4-hydroxy toluène), le débit est de 1 $mL.min^{-1}$, la température du système de 35° C et la durée d'analyse de 60 min. Les colonnes utilisées sont un jeu de trois colonnes AGILENT de dénomination commerciale « PL GEL MIXED B LS». Le volume injecté de la solution de l'échantillon est 100 μL. Le système de détection est composé d'un viscosimètre différentiel Wyatt de dénomination commerciale « VISCOSTAR II », d'un réfractomètre différentiel Wyatt de dénomination commerciale « OPTILAB T-REX » de longueur d'onde 658 nm, d'un détecteur à diffusion de lumière statique multi angle Wyatt de longueur d'onde 658 nm et de dénomination commerciale « DAWN HELEOS 8+ ».

Pour le calcul des masses molaires moyennes en nombre et de l'indice de polydispersité, est intégrée la valeur de l'incrément d'indice de réfraction dn/dc de la solution de l'échantillon obtenue ci-dessus. Le logiciel d'exploitation des données chromatographiques est le système « ASTRA de Wyatt ».

<u>II-Caractérisation des compositions de caoutchouc</u> :

II-1) Propriétés de vulcanisation :

Les mesures sont effectuées à 150°C avec un rhéomètre à chambre oscillante, selon la norme DIN 53529 - partie 3 (juin 1983). L'évolution du couple rhéométrique en fonction du temps décrit l'évolution de la rigidification de la composition par suite de la réaction vulcanisation. Les mesures sont traitées selon la norme DIN 53529 - partie 2 (mars 1983). $T\alpha$ (par exemple T90) est le temps nécessaire pour atteindre une conversion de $\alpha$%, c'est-à-dire $\alpha$% (par exemple 90%) de l'écart entre les couples minimum et maximum.

II-2) Rigidité et hystérèse des compositions de caoutchouc :

Les propriétés dynamiques sont mesurées sur un viscoanalyseur (Metravib VA4000), selon la norme D 5992-96. On enregistre la réponse d'un échantillon de composition vulcanisée (éprouvette cylindrique de 4 mm d'épaisseur et de 400 $mm^2$ de section), soumis à une sollicitation sinusoïdale en cisaillement simple alterné à contrainte imposée de 0,7 MPa et à une fréquence de 10 Hz, lors d'un balayage en température, d'une température minimale inférieure à la Tg des élastomères des compositions jusqu'à une température maximale supérieure à 100°C. Les résultats exploités sont le module complexe de cisaillement dynamique (G*) et le facteur de perte $\tan\delta$; les valeurs de G* sont prises à la température de 60°C et le facteur de perte $\tan\delta$ à 20°C et 60°C.

Les résultats de rigidité et d'hystérèse sont exprimés en base 100 par rapport à un témoin pris comme référence. Une valeur inférieure à 100 indique une valeur plus faible que celle du témoin.

<u>III-Préparation des élastomères :</u>

Synthèse d'un copolymère éthylène/1,3-butadiène :

Un copolymère d'éthylène et de 1,3-butadiène E1 est synthétisé selon le mode opératoire suivant :
Dans un réacteur contenant à 80°C du méthylcyclohexane, de l'éthylène (Eth) et du 1,3-butadiène (Btd) dans les proportions indiquées dans le tableau 3, on ajoute du butyloctylmagnésium (BOMAG) pour neutraliser les impuretés du réacteur, puis le système catalytique (cf tableau 3). A ce moment, la température de réaction est régulée à 80°C et la réaction de polymérisation démarre. La réaction de polymérisation se déroule à une pression constante de 8 bars. Le réacteur est alimenté tout au long de la polymérisation en éthylène et en 1,3-butadiène dans les proportions définies dans le tableau 3. La réaction de polymérisation est stoppée par refroidissement, dégazage du réacteur et ajout d'éthanol. Un anti-oxydant est ajouté à la solution de polymère. Le copolymère E1 est récupéré par séchage en étuve sous vide jusqu'à masse constante.

Le système catalytique est un système catalytique préformé. Il est préparé dans le méthylcyclohexane à partir d'un métallocène, le $[Me_2Si(Flu)_2Nd(\mu\text{-}BH_4)_2Li(THF)]$, d'un co-catalyseur, le butyloctylmagnésium (BOMAG), et d'un monomère de préformation, le 1,3-butadiène, dans les teneurs indiquées dans le tableau 3. Il est préparé selon une méthode de préparation conforme au paragraphe II.1 de la demande de brevet WO 2017093654 A1.

Tableau 3

| Concentration métallocène (mmol/L) | Concentration agent alkylant (mmol/L) | Ratio molaire monomère préformation/métal Nd | Composition de l'alimentation (%mol Eth/Bdt) |
|---|---|---|---|
| 0.07 | 0.36 | 90 | 80/20 |

Synthèse de copolymères éthylène/butadiène/farnésène :

Deux copolymères E2 et E3 sont synthétisés selon le mode opératoire suivant :
Dans un réacteur contenant à 80°C du méthylcyclohexane, de l'éthylène du 1,3-butadiène et du β-farnésène (Far) dans les proportions indiquées dans le tableau 4, on ajoute du butyloctylmagnésium (BOMAG) pour neutraliser les impuretés du réacteur, puis le système catalytique (cf tableau 4). A ce moment, la température de réaction est régulée à 80°C et la réaction de polymérisation démarre. La réaction de polymérisation se déroule à une pression constante de 8 bars. Le réacteur est alimenté tout au long de la polymérisation en éthylène, 1,3-butadiène et en β-farnésène dans les proportions définies dans le tableau 4. La réaction de polymérisation est stoppée par refroidissement, dégazage du réacteur et ajout d'éthanol. Un anti-oxydant est ajouté à la solution de polymère. Le copolymère est récupéré par séchage en étuve sous vide jusqu'à masse constante.

Le système catalytique est un système catalytique préformé. Il est préparé dans le méthylcyclohexane à partir d'un métallocène, le $[Me_2Si(Flu)_2Nd(\mu-BH_4)_2Li(THF)]$, d'un co-catalyseur, le butyloctylmagnésium (BOMAG), et d'un monomère de préformation, le 1,3-butadiène, dans les teneurs indiquées dans le tableau 4. Il est préparé selon une méthode de préparation conforme au paragraphe II.1 de la demande de brevet WO 2017093654 A1.

Tableau 4

| Copolymère | Concentration métallocène (mmol/L) | Concentration agent alkylant (mmol/L) | Ratio molaire monomère préformation/métal Nd | Composition de l'alimentation (%mol Eth/Btd/Far) |
|---|---|---|---|---|
| E2 | 0.10 | 0.4 | 90 | 84/9/7 |
| E3 | 0.09 | 0,25 | 90 | 81/9/10 |

Synthèse d'un copolymère éthylène/butadiène/myrcène :

Un copolymère E4 est synthétisé selon le mode opératoire suivant :
Dans un réacteur contenant à 80°C du méthylcyclohexane, de l'éthylène du 1,3-butadiene et du myrcène (Myr) dans les proportions indiquées dans le tableau 5, on ajoute du butyloctylmagnésium (BOMAG) pour neutraliser les impuretés du réacteur, puis le système catalytique (cf tableau 5). A ce moment, la température de réaction est régulée à 80°C et la réaction de polymérisation démarre. La réaction de polymérisation se déroule à une pression constante de 8 bars. Le réacteur est alimenté tout au long de la polymérisation en éthylène, 1,3-butadiene et en myrcène dans les proportions définies dans le tableau 5. La réaction de polymérisation est stoppée par refroidissement, dégazage du réacteur et ajout d'éthanol. Un anti-oxydant est ajouté à la solution de polymère. Le copolymère est récupéré par séchage en étuve sous vide jusqu'à masse constante.

Le système catalytique est un système catalytique préformé. Il est préparé dans le méthylcyclohexane à partir d'un métallocène, le [Me2Si(Flu)2Nd(μ-BH4)2Li(THF)], d'un co-catalyseur, le butyloctylmagnésium (BOMAG), et d'un monomère de préformation, le 1,3-butadiène, dans les teneurs indiquées dans le tableau 5. Il est préparé selon une méthode de préparation conforme au paragraphe II.1 de la demande de brevet WO 2017093654 A1.

Tableau 5

| Copolymère | Concentration métallocène (mmol/L) | Concentration agent alkylant (mmol/l) | Ratio molaire monomère préformation/métal Nd | Composition de l'alimentation (%mol Eth/Btd/Myr) |
|---|---|---|---|---|
| E4 | 0.09 | 0.4 | 90 | 73/15/12 |

La microstructure des élastomères E1 à E4 figure dans le tableau 6 qui indique les taux molaires des unités éthylène (Eth), des unités du 1,3-butadiène, des motifs 1,2-cyclohexanediyle (cycle), des unités du β-farnésène ou du myrcène. Dans le tableau 6 figurent également la proportion molaire des unités du β-farnésène ou du myrcène selon

qu'elles sont de configuration 1,4, de configuration 1,2 et 3,4 et la masse molaire moyenne en nombre mesurée selon le paragraphe I-3).

Tableau 6

| Elastomère | Eth | Btd | cycle | Far ou Myr | 1.4 | 1.2 | 3.4 | Mn (g/mol) |
|---|---|---|---|---|---|---|---|---|
| E1 | 78 | 14 | 8 | - | - | - | - | 128888 |
| E2 | 79 | 8 | 5 | 8 (Far) | 37 | <1 | 63 | 161000 |
| E3 | 76 | 8 | 5 | 11 (Far) | 36 | <1 | 64 | 200800 |
| E4 | 71 | 15 | 6 | 8 (Myr) | 37 | <1 | 63 | 133000 |

IV-Préparation des compositions de caoutchouc :

Des compositions de caoutchouc dont la formulation exprimée en pce (parties en poids pour cent parties d'élastomère) figure dans le tableau 7, ont été préparées dans un mélangeur interne dans lequel on introduit successivement le copolymère, la charge renforçante, ainsi que les divers autres ingrédients à l'exception du système de vulcanisation. On conduit alors un travail thermomécanique (phase non-productive) en une étape, qui dure au total environ 5 min, jusqu'à atteindre une température maximale de « tombée » de 150°C. On récupère le mélange ainsi obtenu, on le refroidit puis on incorpore du soufre et l'accélérateur sur un mélangeur (homo-finisseur) à 40 °C, en mélangeant le tout (phase productive) pendant une dizaine de minutes. Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques après vulcanisation à 150°C. Le temps de réticulation appliqué, T(99), est le temps nécessaire pour que le couple de la composition atteigne 99% du couple maximum de la composition.

La composition C1 qui contient l'élastomère E1, copolymère d'éthylène et de 1,3-butadiène, est une composition non conforme à l'invention. Les compositions C2 à C4 qui contiennent respectivement les élastomères E2 à E4 sont des compositions conformes à l'invention.

Tableau 7

| Composition | C1 | C2 | C3 | C4 |
|---|---|---|---|---|
| Elastomère E1 | 100 | - | - | - |
| Elastomere E2 | - | 100 | - | - |
| Elastomère E3 | - | - | 100 | - |
| Elastomère E4 | - | - | - | 100 |
| Noir de carbone (1) | 4 | 4 | 4 | 4 |
| Silice (2) | 98 | 98 | 98 | 98 |
| Agent plastifiant liquide (3) | 4 | 4 | 4 | 4 |
| Résine plastifiante (4) | 47 | 47 | 47 | 47 |
| Antioxydant | 5.4 | 5.4 | 5.4 | 5.4 |
| Cire antiozonante | 2.5 | 2.5 | 2.5 | 2,5 |
| Agent de couplage (5) | 10 | 10 | 10 | 10 |
| Acide stéarique (6) | 4 | 4 | 4 | 4 |
| DPG (7) | 2.1 | 2.1 | 2.1 | 2.1 |
| ZnO (8) | 1 | 1 | 1 | 1 |
| Accélérateur (9) | 2.4 | 2.4 | 2.4 | 2.4 |

(suite)

| Composition | C1 | C2 | C3 | C4 |
|---|---|---|---|---|
| Soufre | 1 | 1 | 1 | 1 |
| (1) N234<br>(2) "Zeosil 1165 MP" de Solvay-Rhodia sous forme de microperles<br>(3) MES/HPD (Catenex SNR de Shell)<br>(4) Résine hydrocarbonée C9/Dicyclopentadiène «Escorez 5600» de la société EXXON (Tg = 52°C)<br>(5) TESPT ("Si69" de Evonik)<br>(6) Stéarine « Pristerene 4931 » de Uniquema<br>(7) Diphénylguanidine<br>(8) Oxyde de Zinc de grade industriel de Umicore<br>(9) N-cyclohexyl-2-benzothiazol-sulfénamide (« Santocure CBS » de Flexsys) | | | | |

V-Résultats :

Les résultats figurent dans le tableau 8. Ils sont exprimés en base 100 par rapport à la composition C1 prise comme témoin. Une valeur inférieure à 100 indique une valeur plus faible que celle du témoin.

Tableau 8

| Composition | C1 | C2 | C3 | C4 |
|---|---|---|---|---|
| G* 60°C | 100 | 63 | 70 | 85 |
| tanδ 20°C | 100 | 90 | 85 | 96 |
| tanδ 60°C | 100 | 91 | 78 | 87 |
| T90 | 100 | 43 | 41 | 54 |

Les compositions C2 à C4 présentent une rigidité plus faible que la composition C1, alors même que les taux d'éthylène sont comparables. L'hystérèse des compositions C2 à C4 est aussi plus faible que celle de C1. Le temps nécessaire à la vulcanisation des compositions de caoutchouc est aussi fortement réduit compte-tenu des valeurs de T90 très inférieures à 100. A la fois les propriétés de cuisson, d'hystérèse et de rigidité des compositions de caoutchouc conformes à l'invention sont améliorées.

## Revendications

**1.** Composition de caoutchouc qui comprend une charge renforçante, un système de vulcanisation et plus de 50 à 100 pce d'un élastomère qui contient plus de 50% en mole d'unités éthylène et qui est un copolymère d'éthylène, d'un premier 1,3-diène qui est le 1,3-butadiène, l'isoprène ou leur mélange et d'un deuxième 1,3-diène de formule (I), $CH_2$=CR-CH=$CH_2$ (I), le symbole R représentant une chaîne aliphatique hydrocarbonée insaturée ayant 3 à 20 atomes de carbone.

**2.** Composition de caoutchouc selon la revendication 1, dans laquelle le copolymère contient plus de 60% en mole d'unités éthylène, préférentiellement contient au moins 70% en mole d'unités éthylène.

**3.** Composition de caoutchouc selon l'une quelconque des revendications 1 à 2, dans laquelle le copolymère contient au plus 85% en mole d'unités éthylène.

**4.** Composition de caoutchouc selon l'une quelconque des revendications 1 à 3, dans laquelle le copolymère contient moins de 30% en mole, préférentiellement au plus 20% en mole d'unités du deuxième 1,3-diène, plus préférentiellement au plus 15% en mole d'unités du deuxième 1,3-diène de formule (I).

**5.** Composition de caoutchouc selon l'une quelconque des revendications 1 à 4, dans laquelle le copolymère contient moins de 30% en mole d'unités du premier 1,3-diène ou moins de 20% en mole d'unités du premier 1,3-diène.

6. Composition de caoutchouc selon l'une quelconque des revendications 1 à 5, dans laquelle le copolymère contient au moins 1% en mole d'unités du deuxième 1,3-diène.

7. Composition de caoutchouc selon l'une quelconque des revendications 1 à 6, dans laquelle le copolymère contient au moins 5% en mole d'unités du deuxième 1,3-diène.

8. Composition de caoutchouc selon l'une quelconque des revendications 1 à 7 dans laquelle le copolymère contient moins de 80% en mole d'unités éthylène.

9. Composition de caoutchouc selon l'une quelconque des revendications 1 à 8 dans laquelle le premier 1,3-diène est le 1,3-butadiène.

10. Composition de caoutchouc selon l'une quelconque des revendications 1 à 9 dans laquelle le deuxième 1,3-diène est le myrcène, le β-farnésène ou un mélange de myrcène et de β-farnésène.

11. Composition de caoutchouc selon l'une quelconque des revendications 1 à 10, dans laquelle le copolymère est un copolymère statistique.

12. Composition de caoutchouc selon l'une quelconque des revendications 1 à 11, dans laquelle la charge renforçante est présente à un taux allant de 30 à 200 pce.

13. Composition de caoutchouc selon l'une quelconque des revendications 1 à 12, dans laquelle la charge renforçante comprend une silice qui représente plus de 50% en masse de la charge renforçante.

14. Pneumatique qui comporte une bande de roulement, lequel pneumatique comprend une composition de caoutchouc définie selon l'une quelconque des revendications 1 à 13, de préférence dans sa bande de roulement.

**Patentansprüche**

1. Kautschukzusammensetzung, die einen verstärkenden Füllstoff, ein Vulkanisationssystem und mehr als 50 bis 100 phe eines Elastomers, das mehr als 50 Mol-% Ethyleneinheiten enthält und das ein Copolymer von Ethylen, einem ersten 1,3-Dien, bei dem es sich um 1,3-Butadien, Isopren oder eine Mischung davon handelt, und einem zweiten 1,3-Dien der Formel (I), $CH_2=CR-CH=CH_2$ (I), wobei das Symbol R für eine ungesättigte aliphatische Kohlenwasserstoffkette mit 3 bis 20 Kohlenstoffatomen steht, ist, umfasst.

2. Kautschukzusammensetzung nach Anspruch 1, wobei das Copolymer mehr als 60 Mol-% Ethyleneinheiten enthält und bevorzugt mindestens 70 Mol-% Ethyleneinheiten enthält.

3. Kautschukzusammensetzung nach einem der Ansprüche 1 bis 2, wobei das Copolymer höchstens 85 Mol-% Ethyleneinheiten enthält.

4. Kautschukzusammensetzung nach einem der Ansprüche 1 bis 3, wobei das Copolymer weniger als 30 Mol-%, bevorzugt höchstens 20 Mol-%, Einheiten des zweiten 1,3-Diens, weiter bevorzugt höchstens 15 Mol-% Einheiten des zweiten 1,3-Diens der Formel (I), enthält.

5. Kautschukzusammensetzung nach einem der Ansprüche 1 bis 4, wobei das Copolymer weniger als 30 Mol-% Einheiten des ersten 1,3-Diens oder weniger als 20 Mol-% Einheiten des ersten 1,3-Diens enthält.

6. Kautschukzusammensetzung nach einem der Ansprüche 1 bis 5, wobei das Copolymer mindestens 1 Mol-% Einheiten des zweiten 1,3-Diens enthält.

7. Kautschukzusammensetzung nach einem der Ansprüche 1 bis 6, wobei das Copolymer mindestens 5 Mol-% Einheiten des zweiten 1,3-Diens enthält.

8. Kautschukzusammensetzung nach einem der Ansprüche 1 bis 7, wobei das Copolymer weniger als 80 Mol-% Ethyleneinheiten enthält.

**9.** Kautschukzusammensetzung nach einem der Ansprüche 1 bis 8, wobei es sich bei dem ersten 1,3-Dien um 1,3-Butadien handelt.

**10.** Kautschukzusammensetzung nach einem der Ansprüche 1 bis 9, wobei es sich bei dem zweiten 1,3-Dien um Myrcen, β-Farnesen oder eine Mischung von Myrcen und β-Farnesen handelt.

**11.** Kautschukzusammensetzung nach einem der Ansprüche 1 bis 10, wobei es sich bei dem Copolymer um ein statistisches Copolymer handelt.

**12.** Kautschukzusammensetzung nach einem der Ansprüche 1 bis 11, wobei der verstärkende Füllstoff in einem Gehalt im Bereich von 30 bis 200 phe vorliegt.

**13.** Kautschukzusammensetzung nach einem der Ansprüche 1 bis 12, wobei der verstärkende Füllstoff eine Kieselsäure umfasst, die mehr als 50 Massen-% des verstärkenden Füllstoffs ausmacht.

**14.** Reifen, der eine Lauffläche umfasst, wobei der Reifen eine Kautschukzusammensetzung gemäß einem der Ansprüche 1 bis 13 umfasst, vorzugsweise in seiner Lauffläche.

## Claims

**1.** Rubber composition which comprises a reinforcing filler, a vulcanization system and more than 50 to 100 phr of an elastomer which contains more than 50 mol% of ethylene units and which is a copolymer of ethylene, of a first 1,3-diene which is 1,3-butadiene, isoprene or mixture thereof, and of a second 1,3-diene of formula (I), $CH_2=CR-CH=CH_2$ (I), the symbol R representing an unsaturated aliphatic hydrocarbon chain having 3 to 20 carbon atoms.

**2.** Rubber composition according to Claim 1, in which the copolymer contains more than 60 mol% of ethylene units, preferably at least 70 mol% of ethylene units.

**3.** Rubber composition according to either one of Claims 1 and 2, in which the copolymer contains at most 85 mol% of ethylene units.

**4.** Rubber composition according to any one of Claims 1 to 3, in which the copolymer contains less than 30 mol%, preferentially at most 20 mol% of units of the second 1,3-diene, more preferentially at most 15 mol% of units of the second 1,3-diene of formula (I).

**5.** Rubber composition according to any one of Claims 1 to 4, in which the copolymer contains less than 30 mol% of units of the first 1,3-diene or less than 20 mol% of units of the first 1,3-diene.

**6.** Rubber composition according to any one of Claims 1 to 5, in which the copolymer contains at least 1 mol% of units of the second 1,3-diene.

**7.** Rubber composition according to any one of Claims 1 to 6, in which the copolymer contains at least 5 mol% of units of the second 1,3-diene.

**8.** Rubber composition according to any one of Claims 1 to 7, in which the copolymer contains less than 80 mol% of ethylene units.

**9.** Rubber composition according to any one of Claims 1 to 8, in which the first 1,3-diene is 1,3-butadiene.

**10.** Rubber composition according to any one of Claims 1 to 9, in which the second 1,3-diene is myrcene, β-farnesene or a mixture of myrcene and β-farnesene.

**11.** Rubber composition according to any one of Claims 1 to 10, in which the copolymer is a statistical copolymer.

**12.** Rubber composition according to any one of Claims 1 to 11, in which the reinforcing filler is present at a content ranging from 30 to 200 phr.

**13.** Rubber composition according to any one of Claims 1 to 12, in which the reinforcing filler comprises a silica which represents more than 50% by weight of the reinforcing filler.

**14.** Tyre which comprises a tread, which tyre comprises a rubber composition defined in any one of Claims 1 to 13, preferably in the tread thereof.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2014114607 A
- WO 03018332 A
- FR 2898077
- WO 2007054224 A
- WO 2007054223 A
- WO 2017093654 A1
- WO 2018020122 A1
- WO 03016215 A1
- WO 03016387 A1
- WO 03002648 A1
- US 2005016651 A1
- WO 03002649 A1
- US 2005016650 A1
- WO 02083782 A1
- US 7217751 B2


### Littérature non-brevet citée dans la description


- **BRUNAUER-EMMETT-TELLER**. *The Journal of the American Chemical Society*, February 1938, vol. 60, 309
- **R. MILDENBERG** ; **M. ZANDER** ; **G. COLLIN**. Hydrocarbon Resins. VCH, 1997
- **S.GEORGES** ; **M.BRIA** ; **P. ZINCK** ; **M. VISSEAUX**. *Polymer*, 2014, vol. 55, 3869-3878